## Europäisches Patentamt

## European Patent Office

## Office européen des brevets

(11) Veröffentlichungsnummer: **0 252 066**
**A1**

(12) **EUROPÄISCHE PATENTANMELDUNG**

(21) Anmeldenummer: 87890142.0

(22) Anmeldetag: 23.06.87

(51) Int. Cl.⁴: **E 06 B 3/66**
G 05 B 19/12

(30) Priorität: 23.06.86 AT 1707/86

(43) Veröffentlichungstag der Anmeldung:
07.01.88 Patentblatt 88/01

(84) Benannte Vertragsstaaten:
AT DE FR GB IT SE

(71) Anmelder: **Lisec, Peter**
**Bahnhofstrasse 34**
**A-3363 Amstetten-Hausmening (AT)**

(72) Erfinder: **Lisec, Peter**
**Bahnhofstrasse 34**
**A-3363 Amstetten-Hausmening (AT)**

(74) Vertreter: **Beer, Manfred, Dipl.-Ing. et al**
**Lindengasse 8**
**A-1070 Wien (AT)**

(54) Steuerung einer Anlage zur Herstellung von Isolierglas.

(57) Für eine Anlage zur Herstellung von Isolierglas mit mehreren Stationen, wie beispielsweise einer Station (5) zum Reinigen der Glastafeln, einer Station (9, l0) zum Herstellen der Abstandhalterrahmen, insbesondere durch Biegen, einer Station (7) zum Ansetzen von Abstandhalterrahmen, einer Station (l3) zum Zusammenstellen von Isolierglaselementen, einer Preßstation (l6), einer Station (l8) zum Füllen der Randfuge des Isolierglases mit Dichtmasse, wird eine Steuerung vorgeschlagen, die einen auf eine der Glastafeln eines herzustellenden Isolierglases an angeordneten Datenträger, der in maschinenlesbarer Form Angaben über das herzustellende Isolierglas enthält und wenigstens ein Lesegerät (22, 25, 28, 3l, 36, 37, 42, 43) umfaßt, das wenigstens die für die in der betroffenen Station durchzuführenden Arbeiten wesentlichen Abmessungen und Eigenschaften des Isolierglaselementes erfaßt und mit der Steuereinheit (24, 27, 30, 33, 34, 39, 40) der Station (5, 7, 9, l0, l3, l6, l8, 20) verbunden ist.

Fig. 1

EP 0 252 066 A1

**Beschreibung**

Steuerung einer Anlage zur Herstellung von Isolierglas

Die Erfindung betrifft eine Steuerung einer Anlage zur Herstellung von Isolierglas mit mehreren Stationen, wie beispielsweise einer Station zum Reinigen der Glastafeln, einer Station zum Herstellen der Abstandhalterrahmen, insbesondere durch Biegen, einer Station zum Ansetzen von Abstandhalterrahmen, einer Station zum Zusammenstellen von Isolierglaselementen, einer Preßstation, einer Station zum Füllen der Randfuge des Isolierglases mit Dichtmasse.

Anlagen zur Herstellung von Isolierglas sind bekannt. Beispielsweise kann auf die IT-B 984 759 verwiesen werden. Diese bekannte Anlage zur Herstellung von Isolierglas wird durch eine Vielzahl von Schaltern, Meßumformern, Lichtschranken usw. gesteuert, die über die gesamte Anlage und deren Stationen verteilt angeordnet sind.

Auch die einzelnen Stationen, in welchen die verschiedenen Tätigkeiten im Zuge der Herstellung von Isolierglas ausgeführt werden, werden durch in diesen Stationen vorgesehene Schalter, Lichtschranken und Längenmeßeinrichtungen usw. gesteuert. Dies gilt beispielsweise für die aus der DE-C 32 23 881 bekannte Vorrichtung zum Biegen von Hohlprofilleisten zu Abstandhalterrahmen für Isolierglas. Auch bei der aus der DE-C 29 03 649 bekannten Vorrichtung zum Beschichten von Abstandhalterrahmen für Isolierglas mit Kleb- bzw. Dichtmasse wird das Öffnen und Schließen der Düsen, aus welchen die Dichtmasse auf die Seitenflanken der Abstandhalterrahmen aufgebracht werden und die Bewegungen der Wendevorrichtung (und deren Bewegungsgeschwindigkeit) über in der Vorrichtung eingebaute Lichtschranken, Annäherungsschalter ud. dgl. gesteuert. Bei Vorrichtung zum Ansetzen von beschichteten Abstandhalterrahmen auf Glastafeln, wie sie beispielsweise aus der am 15. Juli 1981 bekanntgemachten österr. Patentanmeldung A 6955/78 oder der DE-C 32 23 848 bekannt sind, werden die Bewegungen der Vorrichtung beim Ansetzen eines Abstandhalterrahmens auf eine Glastafel oder einen Isolierglasrohling (bei der Herstellung von Mehrscheibenisolierglas) durch in der Vorrichtung selbst vorgesehene Schalter gesteuert. Das Gleiche gilt für die aus der DE-B 28 20 630 und der aus der DE-A 31 22 736 bekannten Vorrichtungen zum Zusammenstellen von Isolierglaselementen.

Auch die Vorrichtungen zum Pressen von Isolierglas, die wie aus der IT-B 984 759 bekannt, als Walzenpressen oder gemäß der DE-C 31 30 645 als Plattenpressen ausgebildet sein können, werden in Abhängigkeit von den Abmessungen des Isolierglases gesteuert, wozu entsprechende Lichtschranken od. dgl. vorgesehen sind.

Auch bei Vorrichtungen ("Versiegelungsstationen"), in welchen die Randfugen der Isolierglasrohlinge mit einem Dichtungsmittel mit Hilfe einer oder mehrerer Fülldüsen, die sich entlang der Randfugen um den Isolierglasrohling herum bewegen, gefüllt werden, werden die Bewegungen der Düsen sowie das Öffnen und Schließen derselben sowie der Transport der Isolierglasrohlinge durch Schalter, die in der Vorrichtung vorgesehen sind und die beispielsweise als berührungslos ansprechende Annäherungsschalter ausgebildet sein können, gesteuert, wie dies aus der DE-C 28 16 437 oder der DE-C 28 26 785 bekannt ist.

Schließlich ist auch bei der aus der DE-C 30 38 425 bekannten Vorrichtung zum Fördern von Isolierglas eine Meßvorrichtung vorgesehen, welche die Höhe des Isolierglases erfaßt und eine an der Oberkante des Isolierglases angreifende Abstützvorrichtung entsprechend bewegt. In der aus der DE-C 30 38 425 bekannten Vorrichtung ist es weiters notwendig, den Abstand der an der Unterkante des Isolierglases angreifenden Förderelemente voneinander entsprechend der Dicke des Isolierglases einzustellen.

Zusammenfassend zeigt der geschilderte Stand der Technik, daß es bei Anlagen zur Herstellung von Isolierglas bislang üblich war, in jeder der Stationen durch in der jeweiligen Station angeordnete Meßvorrichtungen, Schalter usw. jeweils die Abmessungen des Isolierglases oder seiner Bestandteile, die in der Station be- oder verarbeitet werden sollen, zu erfassen und damit die von ihren Arbeitselementen auszuführenden Tätigkeiten und/oder Bewegungen zu steuern.

Der Erfindung liegt die Aufgabe zugrunde, die Steuerung einer Anlage zur Herstellung von Isolierglas in dem Sinne zu vereinfachen, daß mit möglichst wenigen oder gar keinen Meßvorrichtungen, Lichtschranken, Endschaltern u. dgl., die den einzelnen Stationen zugeordnet sind, das Auslangen gefunden wird und dennoch ein weitgehend oder vollständig automatischer Betrieb der Anlage möglich ist.

Erfindungsgemäß wird diese Aufgabe gelöst durch einen auf einer der Glastafeln eines herzustellenden Isolierglases an vorbestimmter Stelle angeordneten Datenträger, der in maschinenlesbarer Form Angaben über das herzustellende Isolierglas enthält und durch wenigstens ein Lesegerät, das wenigstens einer der Stationen der Anlage zur Herstellung von Isolierglas zugeordnet ist, das wenigstens die für die in der betroffenen Station durchzuführenden Arbeiten wesentlichen Abmessungen und Eigenschaften des Isolierglases erfaßt und mit der Steuereinheit der Station verbunden ist.

Die Erfindung geht von der Erkenntnis aus, daß es ohnedies üblich ist, auf Isolierglas Etiketten od. dgl. aufzukleben, die beispielsweise von einer elektronischen Auftragsbearbeitungsanlage gedruckt werden. Auf diese Etiketten od. dgl. werden erfindungsgemäß in maschinenlesbarer Form Daten über die Abmessungen und die wesentlichen Eigenschaften des herzustellenden Isolierglaselementes angeordnet, z. B. aufgedruckt. Weiters geht die Erfindung davon aus, daß Isolierglas oder dessen Elemente in jeder Station der Anlage eine genau definierte Lage einnehmen, so daß es möglich ist, beispielsweise jeder Station ein Lesegerät an der Stelle zuzuordnen, an der der Datenträger aufgebracht ist, der in maschinenlesbarer Form Angaben über das herzustellende Isolierglas enthält. Das einer Station zugeordnete Lesegerät erfaßt von den in maschinenlesbarer Form, z.B. als Strichcode auf den Datenträger enthaltenen Angaben, diejenigen Angaben, welche für die in der jeweiligen Station auszuführenden Arbeiten und Einstellungen der Elemente der Station notwendig sind. Es ist ersichtlich, daß auf diese Weise in den mit einem solchen Lesegerät ausgestatten Stationen weitere Einrichtungen zum Erfassen der Abmessungen usw. des Isolierglaselementes entbehrlich sind. Die Erfindung erstreckt sich auch auf eine Ausführungsform, bei welcher ein einziges Lesegerät vorgesehen ist, das mit den Steuereinheiten von mehreren Stationen verbunden ist.

In einer bevorzugten Ausführungsform ist der Datenträger ein aufklebbares Etikett.

In einer Ausführungsform der Erfindung kann vorgesehen, sein, daß der Datenträger neben den in maschinenlesbarer Form enthaltenen Angaben über die Abmessungen des herzustellenden Isolierglases auch Angaben über den Hersteller usw. in normal lesbarer Form enthält. Diese Ausführungsform bewährt sich besonders, wenn, wie oben erwähnt, die Auftragsbearbeitung mit Hilfe einer elektronischen Datenverarbeitungsanlage erfolgt.

Besonders vorteilhaft ist es im Rahmen der Erfindung, wenn der Datenträger im vorgegebenen Abstand von der vorderen, unteren Ecke des Isolierglases angeordnet ist. Dies, weil für gewöhnlich, die vordere, untere Ecke des Isolierglases in den Stationen der Anlage zur Herstellung von Isolierglas eine genau definierte Lage einnimmt, so daß das Lesegerät bei in der Referenzlage angeordnetem Isolierglas (oder den Einzelteilen desselben) dem Daten träger genau gegenüberliegend angeordnet ist oder aber der Datenträger wird am Lesegerät vorbeibewegt, wenn sich das Isolierglas oder seine Einzelteile in der Anlage bewegen.

In Fällen, wo bereits vor dem Einlangen des Isolierglases Elemente der Bearbeitungsstation an die Abmessungen des Isolierglases oder seiner Bauteile anzupassen sind, wie dies beispielsweise für Vorrichtungen zum Ansetzen von Abstandhalterrahmen (DE-C 32 23 848) oder für Vorrichtungen zum Zusammenstellen von Isolierglaselementen (DE-B 28 20 630 oder DE-A 3I 22 736) der Fall ist, empfiehlt es sich im Rahmen der Erfindung, wenn das Lesegerät, bezogen auf die Arbeitsrichtung, vor der Station, der es zugeordnet ist, angeordnet ist.

Insbesondere, wenn der Datenträger in bezug auf die vordere, untere Ecke des Isolierglases in vorbestimmter Lage ausgerichtet ist, empfiehlt es sich im Rahmen der Erfindung vorzusehen, daß das Lesegerät bei in der Station stehendem Isolierglas gegenüber den vorderen, unteren Ecke desselben, den gleichen Abstand aufweist wie der Datenträger.

Die Erfindung betrifft auch eine Anlage zur Herstellung von Isolierglas mit mehreren Stationen, wie beispielsweise einer Station zum Reinigen der Glastafeln, einer Station zum Herstellen der Abstandhalterrahmen, insbesondere durch Biegen, einer Station zum Ansetzen von Abstandhalterrahmen, einer Station zum Zusammenstellen von Isolierglas, einer Preßstation, einer Station zum Füllen der Randfuge des Isolierglases mit Dichtmasse und mit einer Steuerung. Diese Anlage ist dadurch gekennzeichnet, daß eine Station vorgesehen ist, in der auf eine der Glasscheiben eines herzustellenden Isolierglases an vorbestimmter Stelle händisch oder maschinell ein Datenträger aufgebracht wird, der in maschinenlesbarer Form Angaben über das herzustellende Isolierglas enthält und daß einer oder mehreren Stationen der Anlage zur Herstellung von Isolierglas ein Lesegerät zugeordnet ist, das wenigstens die für die in der betroffen Station durchzuführenden Arbeiten wesentlichen Abmessungen und Eigenschaften des Isolierglases erfaßt und an die Steuereinheit der Station weitergibt.

Weitere Merkmale und Einzelheiten der Erfindung ergeben sich aus der nachfolgenden Beschreibung und den Unteransprüchen.

Nachstehend werden verschiedene Ausführungsformen der erfindungsgemäßen Steuerung beschrieben.

Das einer Station zum Reinigen der Glastafeln, aus welchen das Isolierglas zusammengesetzt wird, zugeordnete Lesegerät erfaßt z.B. die Daten über die Dicke und ggf. auch über die Länge und Breite der Glastafeln. Aufgrund der vom Lesegerät erfaßten Daten kann der Abstand der in der Station vorgesehenen Walzen- oder Bandbürsten, entsprechend der Dicke der Glastafel eingestellt werden, ohne daß besondere Meßvorrichtungen, welche die Dicke der zu reinigenden Glastafeln erfassen, eingestellt werden. Wenn zusätzlich die Länge und ggf. auch die Breite der Glastafeln erfaßt wird, dann erübrigen sich Schalter, wie beispielsweise Lichtschranken, die feststellen, wann die Station zum Beschicken mit der nächsten Glastafel wieder frei ist, da, ausgehend von der Bewegungsgeschwindigkeit der Förderorgane, mit welcher die Glastafeln durch die Station zum Reinigen von Glastafeln bewegt werden, festgestellt werden kann, wann eine Glastafel die Reinigungsvorrichtung verlassen hat.

Weiters kann ein Lesegerät vorgesehen sein, das die auf dem Datenträger enthaltenen Daten über die Länge und Breite des Isolierglases sowie die Breite des zu verwendenden Abstandhalterrahmens erfaßt und an die Steuereinheit einer Station zum Herstellen von Abstandhalter rahmen, beispielsweise einer Rahmenbiegevorrichtung und ggf. weiters einer Vorrichtung zum Beschichten der Abstandhalterrahmen mit Klebmasse weitergibt, so daß diese Vorrichtung(en) aufgrund der ausgelesenen Daten gesteuert werden können. Auf diese Weise kann eine beispielsweise gemäß der DE-C 32 23 881 ausgebildete Vorrichtung zum Biegen von Hohlprofilleisten zu Abstandhalterrahmen aufgrund der vom Lesegerät erfaßten Daten gesteuert werden. Das Gleiche gilt für eine beispielsweise gemäß der DE-C 29 03 649 ausgebildete Vorrichtung zum Beschichten von Abstandhalterrahmen für Isolierglas mit Kleb- bzw. Dichtmasse. Bei einer solchen Vorrichtung kann beispielsweise die Geschwindigkeit, mit der die Abstandhalterrahmen zwischen den einzelnen Beschichtungsvorgängen um 90° gedreht werden, gesteuert werden.

Das einer Station zum Ansetzen von Abstandhalterrahmen an eine Glastafel zugeordnete Lesegerät erfaßt die am Datenträger enthaltenen Daten über die Abmessungen des für das herzustellende Isolierglaselement bestimmten Abstandhalterrahmens (z.B. Länge und Breite) und steuert so die Bewegungen einer Halterung für den anzusetzenden Abstandhalterrahmen zur Anpassung desselben an die Abmessungen des Abstandhalterrahmens. Bei dieser Ausführungsform der Erfindung ist es aufgrund der vom Lesegerät erfaßten Daten über die Abmessungen des Abstandhalterrahmens möglich, die Halterung, welche den Abstandhalterrahmen erfaßt und an eine Glastafel ansetzt (vgl. DE-C 32 23 848) an die Größe des Abstandhalterrahmens anzupassen, ohne daß in der Vorrichtung selbst Meßvorrichtungen zur Erfassung der Größe des Abstandhalterahmens (z.B. Länge und Breite) vorgesehen sein müssen.

Ein Lesegerät, das einer Station zum Zusammenstellen von Isolierglaselementen zugeordnet ist, erfaßt Abmessungen über die Höhe und Dicke des herzustellenden Isolierglases, sowie Angaben darüber, ob Zwei- oder Mehrfach isolierglas herzustellen ist und gibt die Daten an die Steuereinheit weiter. Diese steuert auf Grund der erfaßten Daten das Ausmaß der Bewegungen der Station zum Zusammenstellen von Isolierglaselementen einschließlich des Zustellens (richtige Ausrichtung der Höhe nach) des mit Rollen bestückten Balkens, an dem die zweite Glastafel oben anliegend in die Station gefördert wird. Diese Stationen zum Zusammenstellen von Isolierglaselementen besitzen in ihrer aus der DE-C 28 20 630 oder der DE-A 31 22 736 bekannten Ausführungsform, nämlich einen mit Rollen bestückten, horizontalen Balken, wobei sich die zweite, in die Station geförderte Glastafel mit ihrem oberen Rand an den Rollen am Balken abstützt. Da bei den bekannten Stationen zum Zusammenstellen von Isolierglaselementen die erste in die Station geförderte Glastafel vor dem Heranfördern der zweiten Glastafel nach hinten versetzt werden muß und das Ausmaß des Nach-Hinten-Versetzens von der Dicke des Abstandhalterrahmens und damit der Dicke des Isolierglases anhängt, kann auch dieses Nach-Hinten-Versetzen über die vom Lesegerät erfaßten Daten über die Dicke des Isolierglases gesteuert werden, so daß der beispielsweise in der DE-A 31 27 736 beschriebene, als Lichtschranke ausgebildete Schalter, der das Nach-Hinten-Versetzen der ersten Glastafel steuert, entbehrlich ist. Weiters kann die Station zum Zusammenstellen von Isolierglas über die vom Lesegerät ausgelesenen Daten so gesteuert werden, daß in ihr Drei- oder Mehrfachisolierglas zusammengebaut wird, wie dies im Prinzip in der DE-C 28 20 630 oder der DE-A 31 22 736 beschrieben ist.

Im Zuge der Herstellung von Isolierglas werden die Isolierglasrohlinge nach ihrem Zusammenstellen in einer Preßstation gepreßt, wobei die Preßstationen als Durchlaufwalzenpressen, wie aus der IT-B 984 759, oder als Plattenpressen, wie aus der DE-C 31 06 645 bekannt, ausgeführt sein können. Insbesondere bei Walzenpressen wird der Preßdruck und auch die Geschwindigkeit, mit welcher der Isolierglasrohling durch die Preßstation gefördert wird, in Abhängigkeit von der Größe des Isolierglasrohlinges gewählt. In einer Ausführungsform der Erfindung erfaßt das der Preßstation zugeordnete Lesegerät die Abmessungen über die Größe des Isolierglases. Die Preßstation wird dann in Abhängigkeit von den erfaßten Daten gesteuert.

Bei Stationen zum Füllen der Randfugen von Isolierglasrohlingen mit Dichtmasse, wie sie aus der DE-C 28 16 437 oder der DE-C 28 46 785 bekannt sind, sind mit den Düsen Meßumformer verbunden, die das Öffnen und Schließen und die Bewegungen der Fülldüsen sowie den Transport der Isolierglasscheibe steuern. Diese Meßumformer sind entbehrlich, wenn ein dieser Station zugeordnetes Lesegerät Daten über die Längen der zu füllenden Randfugen sowie deren Breite und Tiefe erfaßt und die Bewegung der Versiegelungsdüse(n) steuert. Mit Hilfe der vom Lesegerät, das der Station zum Füllen der Randfugen zugeordnet ist, erfaßten Daten können die Bewegungen der Fülldüsen einschließlich der Bewegungsgeschwindigkeit derselben an die Abmessungen der Randfugen (Länge und Querschnittsgröße der Randfugen) angepaßt, d. h. entsprechend gewählt werden. Auch das Öffnen und Schließen der Fülldüsen kann mit Hilfe der vom Lesegerät erfaßten Daten gesteuert werden.

Wenn als Vorrichtung zum Fördern von Isolierglas in der Station zum Füllen der Randfugen von Isolierglas bzw. nachgeordneten Stationen eine Vorrichtung gemäß der DE-C 30 38 425 vorgesehen ist, dann kann vorgesehen sein, daß das der Versiegelungsstation zugeordnete Lesegerät zusätzlich die auf den Datenträger enthaltenen Daten über die Dicke des Isolierglaselementes erfaßt und das Fördermittel, das hakenförmige, das Isolierglaselement von unten untergreifende Auflager aufweist, entsprechend der Stärke des Isolierglases einstellt. Mit Hilfe dieses Lesegerätes kann auch der mit Rollen bestückte horizontale Balken, an dem sich das Isolierglas oben abstützt, ent sprechend der Höhe des versiegelten Isolierglases eingestellt werden, wenn ein solcher, wie in der DE-C 30 38 425 beschrieben, vorgesehen ist. Falls anstelle des mit Rollen bestückten Balkens eine Luftkissenwand als seitliche Abstützung für das Isolierglaselement vorgesehen ist, dann kann der Druck, mit dem Luft aus den Öffnungen in der Stützwand ausströmt, in Abhängigkeit von den vom Lesegerät erfaßten Daten betreffend die Größe des Isolierglases gesteuert werden, damit sich das für einen berührungsfreien Transport nötige Luftkissen aufbaut. In diesem Zusammenhang ist darauf hinzuweisen, daß ein zu geringer Druck ein Anschlagen des Isolierglases an der Stützwand und ein zu hoher Druck ein Abwerfen des Isolierglases von der Fördervorrichtung zur Folge haben kann.

Weiters kann die Geschwindigkeit der Relativbewegungen zwischen Versiegelungsdüse einerseits und Isolierglasrohling anderseits und die Menge der in der Zeiteinheit aus der Düse ausgebrachten Dichtmasse auf Grund der von der Station zum Füllen der Randfugen zugeordneten Lesegerät erfaßten Daten über Länge, Breite und Tiefe der zu verfüllenden Randfugen, gesteuert werden.

Falls am Isolierglas Kantenschutzprofile aufgebracht werden, ist es weiters möglich, daß einer Vorrichtung zum Ablängen von Kantenschutzprofilen für Isolierglas ein Lesegerät zugeordnet ist, das die Länge und Breite des Isolierglases erfaßt und die Ablängvorrichtung für die Kantenschutzprofile entsprechend steuert.

Weiters kann vorgesehen sein, daß einer Station zum Füllen von insbesondere gebogenen Abstandhalterrahmens mit Trockenmittel (Molekularsieb) ein Lesegerät zugeordnet ist, das die Abmessungen des Abstandhalterrahmens für das herzustellende Isolierglaselement erfaßt und in Abhängigkeit davon die Menge des einzubringenden Trockenmittels steuert. Bei dieser Ausführungsform sind in der Station zum Füllen der Abstandhalterrahmen mit Trockenmittel die Vorrichtungen, mit welchen festgestellt wird, ob der Abstandhalterrahmen vollständig gefüllt worden ist, entbehrlich. Eine automatische Rahmenfüllstation ist beispielsweise im DE-U 85 19 191 beschrieben.

Die den einzelnen Stationen zugeordneten Lesegeräte, welche die für die jeweilige Station in Betracht kommenden Daten vom Datenträger erfassen und an die Steuereinheit der Station weitergeben, müssen nicht unbedingt in der Station selbst angeordnet sein. Insbesondere bei solchen Stationen, in welchen die Abstütz- und Förderorgane entsprechend den Abmessungen der Glasscheibe bzw. des Isolierglaselementes eingestellt werden müssen, kann das Lesegerät in Arbeitsrichtung der Anlage zur Herstellung von Isolierglas gesehen, vor der betroffenen Station angeordnet sein. Dies gilt beispielsweise für Stationen zum Zusammenstellen von Isolierglaselementen, oder die aus der DE-C 30 38 425 bekannte Vorrichtung zum Fördern von Isolierglasscheiben, mit der beispielsweise Stationen zum Füllen der Randfugen von Isolierglasrohlingen ausgestattet sein können. Es versteht sich, daß in diesem Fall der Station zum Füllen der Randfugen und der Vorrichtung zum Fördern von Isolierglas, mit der die Station zum Füllen der Randfugen ausgestattet ist, ein einziges Lesegerät zugeordnet sein kann.

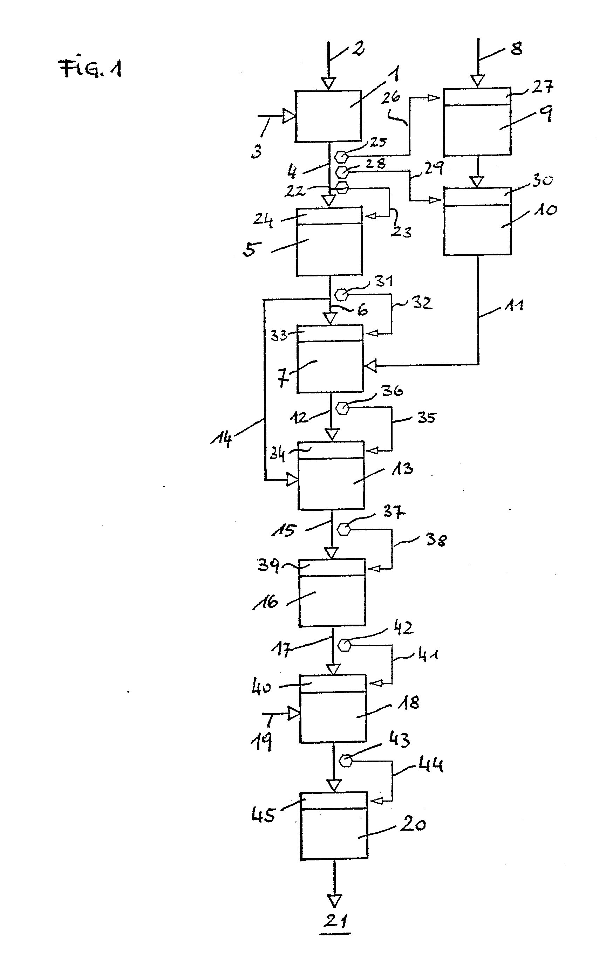

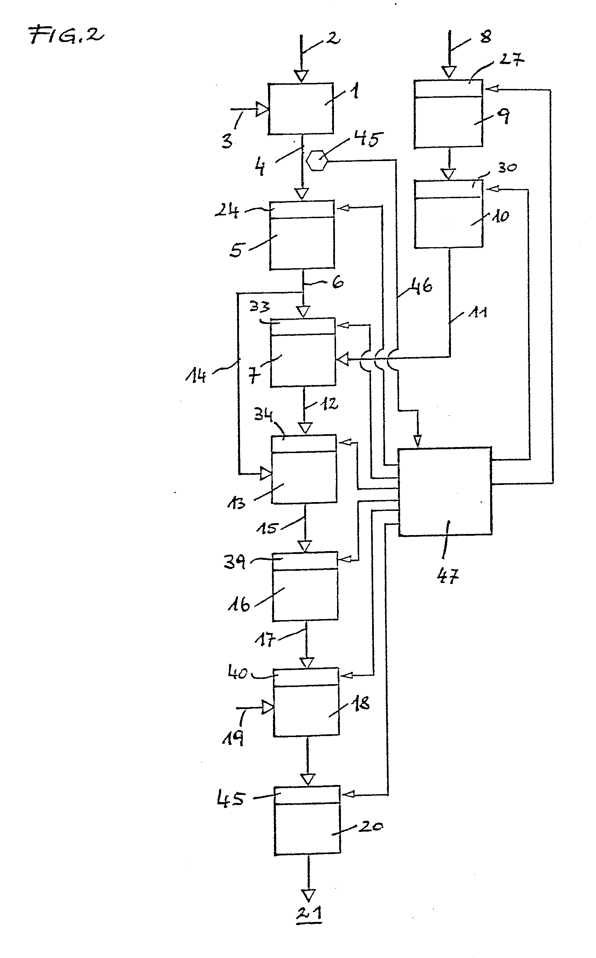

Die Figuren 1 und 2 zeigen schematisch Isolierglasherstellungsanlagen mit der erfindungsgemäßen Steuerung.

In Figur 1 umfaßt die Isolierglasherstellungsanlage eine Station 1 in der auf zugeführte Glastafeln 2 Datenträger 3 an einer vorgegebenen Stelle angebracht werden.

Die mit dem Datenträger versehenen Glasscheiben werden über 4 einer Station 5 zum Reinigen der Glastafeln zugeführt.

Von der Station 5 gelangen die Glastafeln über 6 in eine Station 7 zum Ansetzen von Abstandhalterrahmen an eine gereinigte Glastafel.

Der Station 7 zum Ansetzen von Abstandhalterrahmen auf eine Glastafel werden beispielsweise durch Biegen von über 8 zugeführte Hohlprofilleisten in einer Station 9 hergestellte und in einer Station 10 mit Kleber beschichtete Abstandhalterrahmen über 11 zugeführt.

Die mit einem Abstandhalterrahmen versehenen Glastafeln gelangen über 12 in eine Station 13 zum Zusammenstellen von Isolierglasscheiben, in welche die mit einem Abstandhalterrahmen bestückten Glastafeln mit einer weiteren, von der Station 5 über 14 zugeführten Glastafeln vereinigt werden. Aus der Station 13 gelangen die Isolierglasscheiben über 15 in eine Preßstation 16, wo die Isolierglasscheiben auf das richtige Dickenmaß gepreßt werden.

Die in der Preßstation 16 gepreßten Isolierglasscheiben gelangen über 17 in eine Station 18, in der die Randfugen der Isolierglasscheiben mit über 19 zugeführter Dichtmasse gefüllt werden. Von der Station 18 werden die versiegelten Isolierglasscheiben über eine Fördereinrichtung 20 abtransportiert.

Bei der in Figur 1 gezeigten Ausführungsform der erfindungsgemäßen Isolierglasherstellungsanlage ist jeder Station 5, 7, 9, 10, 13, 16, 18 und 20 ein Lesegerät zugeordnet, das die für die Tätigkeiten in der jeweils betroffenen Station relevanten, auf dem Datenträger gespeicherten Daten erfaßt und über eine Leitung der Steuerung der betreffenden Station zuführt.

Im einzelnen erfaßt das der Station 5 zugeordnete Lesegerät 22 Daten über die Dicke und ggf. auch über die Länge und Breite der in der Station 5 zu reinigenden Glastafeln. Diese Daten werden über eine Leitung 23 der Steuerung 24 der Station 5 zugeführt.

Das Lesegerät 25 erfaßt vom Datenträger die Daten, die für die Herstellung des Abstandhalterrahmens in der Station 9 (Länge und Breite desselben sowie Art der zu verwendenden Hohlprofilleiste) und führt diese über eine Leitung 26 der Steuerung 27 der Station 9 zu.

Das Lesegerät 28 führt über eine Leitung 29 der Steuerung 30 der Station 10 Daten über die Länge und Breite des Abstandhalterrahmens zu, damit die Station 10 zur Beschichtung der Abstandhalterrahmen entsprechend gesteuert werden kann.

Das Lesegerät 31 ist über eine Leitung 32 mit der Steuerung 33 der Station 7 zum Ansetzen von Abstandhalterrahmen an eine Glastafel verbunden und gibt an diese Daten über die Abmessungen des für die herzustellende Isolierglasscheibe bestimmten Abstandhalterrahmens (Länge, Breite und Dicke desselben) weiter.

Das der Steuerung 34 der Station 13 über eine Leitung 35 zugeordnete Lesegerät 36 erfaßt vom Datenträger Daten bezüglich der Abmessungen der herzustellenden Isolierglasscheibe (Höhe, Breite und Dicke desselben sowie Dicke des Abstandhalterrahmens), und gibt die Daten über die Leitung 35 an die Steuerung 34 der Station 13 weiter.

Durch die vom Lesegerät 37 vom Datenträger erfaßten Daten über die Abmessungen der herzustellenden Isolierglasscheibe werden über eine Leitung 38 der Steuerung 39 der Preßstation 16 zugeführt, die dann den in der Preßstation 16 auf die Isolierglasscheibe ausgeübten Druck in Abhängigkeit von den der Steuerung 39 zugeführten Daten steuert.

Das der Steuerung 40 der Station 18 zum Füllen der Randfugen über eine Leitung 41 zugeordnete Lesegerät 42 erfaßt vom Datenträger insbesondere Daten über die Länge und die Querschnittsgröße der Randfugen der Isolierglasscheibe, die mit dem über 9 zugeführten Versiegelungsmaterial gefüllt werden sollen. Auf Grund dieser Daten steuert die Steuereinrichtung 40 der Station l8 die Bewegungen der Isolierglasscheibe, die Menge der in der Zeiteinheit zugeführten Menge an Dichtungsmasse, sowie die Bewegungen der Fülldüse (oder der Fülldüsen).

Schließlich ist noch ein Lesekopf 43 vorgesehen, welcher der Steuerung 45 über eine Leitung 44 Daten über die Dikke der zu transportierenden Isolierglasscheibe zuführt, damit diese Steuerung 45 eine die Isolierglasscheibe an seinem unteren Rand mit von außen her untergreifende Haken unterstützende Fördereinrichtung in der Weise steuern kann, daß die Haken voneinander einen der Dicke der Isolierglasscheibe entsprechenden Abstand aufweisen. Weiters können der Steuerung 45 Daten über die Höhe der Isolierglasscheibe zugeführt werden, damit ein in der Fördereinrichtung 20 vorgesehener, mit Rollen bestückter Balken, an dem sich die Isolierglasscheibe oben abstützt von der Steuerung 45 gegenüber dem oberen Randbereich der Isolierglasscheibe richtig ausgerichtet werden kann.

Figur 2 zeigt eine Ausführungsform, bei der ein einziges Lesegerät 45 vorgesehen ist, das über eine Leitung 46 alle vom Datenträger erfaßten Daten einer Datenverteilstation 47 zuführt. Von der Station 47 werden die jeweils relevanten Daten (sh. Beschreibung von Figur l) den Steuereinrichtungen der verschiedenen Stationen der Isolierglasherstellungsanlage zugeführt.

Es versteht sich, daß auch Kombinationen der in Figuren l und 2 gezeigten Ausführungsformen möglich sind. So ist es beispielsweise möglich, die Leseköpfe 22, 25 und 28 durch einen einzigen Lesekopf zu ersetzen und diesen ggf. über eine Datenverteilstation mit den Steuerungen 24, 27 und 30 der Stationen 5, 9 und l0 zu verknüpfen.

**Patentansprüche**

l. Steuerung einer Anlage zur Herstellung von Isolierglas mit mehreren Stationen, wie beispielsweise einer Station zum Reinigen der Glastafeln, einer Station zum Herstellen der Abstandhalterrahmen, insbesondere durch Biegen, einer Station zum Ansetzen von Abstandhalterrahmen, einer Station zum Zusammenstellen von Isolierglaselementen, einer Preßstation, einer Station zum Füllen der Randfuge des Isolierglases mit Dichtmasse, gekennzeichnet durch einen auf einer der Glastafeln eines herzustellenden Isolierglases an vorbestimmter Stelle angeordneten Datenträger, der in maschinenlesbarer Form Angaben über das herzustellende Isolierglas enthält und durch wenigstens ein Lesegerät, das wenigstens einer der Stationen der Anlage zur Herstellung von Isolierglas zugeordnet ist, das wenigstens die für die in der betroffenen Station durchzuführenden Arbeiten wesentlichen Abmessungen und Eigenschaften des Isolierglases erfaßt und mit der Steuereinheit der Station verbunden ist.

2. Steuerung nach Anspruch l, dadurch gekennzeichnet, daß der Datenträger ein aufklebbares Etikett ist.

3. Steuerung nach Anspruch 2, dadurch gekennzeichnet, daß der Datenträger neben den in maschinenlesbarer Form enthaltenen Angaben über die Abmessungen des herzustellenden Isolierglases auch Angaben über den Hersteller usw. in normal lesbarer Form enthält.

4. Steuerung nach einem der Ansprüche l bis 3, dadurch gekennzeichnet, daß der Datenträger im vorgegebenen Abstand von der vorderen, unteren Ecke des Isolierglases angeordnet ist.

5. Steuerung nach einem der Ansprüche l bis 4, dadurch gekennzeichnet, daß das Lesegerät, bezogen auf die Arbeitsrichtung, vor der Station, der es zugeordnet ist, angeordnet ist.

6. Steuerung nach Anspruch 5, dadurch gekennzeichnet, daß das Lesegerät bei in der Station stehendem Isolierglas gegenüber den vorderen, unteren Ecke desselben, den gleichen Abstand aufweist wie der Datenträger.

7. Anlage zur Herstellung von Isolierglas mit mehreren Stationen, wie beispielsweise einer Station zum Reinigen der Glastafeln, einer Station zum Herstellen der Abstandhalterrahmen, insbesondere durch Biegen, einer Station zum Ansetzen von Abstandhalterrahmen, einer Station zum Zusammenstellen von Isolierglas, einer Preßstation, einer Station zum Füllen der Randfuge des Isolierglases mit Dichtmasse und mit einer Steuerung nach einem oder mehreren der Ansprüche l bis 6, dadurch gekennzeichnet, daß eine Station vorgesehen ist, in der auf eine der Glasscheiben eines herzustellenden Isolierglases an vorbestimmter Stelle händisch oder maschinell ein Datenträger aufgebracht wird, der in maschinenlesbarer Form Angaben über das herzustellende Isolierglas enthält und daß einer oder mehreren Stationen der Anlage zur Herstellung von Isolierglas ein Lesegerät zugeordnet ist, das wenigstens die für die in der betroffenen Station durchzuführenden Arbeiten wesentlichen Abmessungen und Eigenschaften des Isolierglases erfaßt und an die Steuereinheit der Station weitergibt.

8. Anlage nach Anspruch 7, dadurch gekennzeichnet, daß das der Reinigungsvorrichtung für die Glastafeln, aus welchen das Isolierglas zusammenzusetzen ist, zugeordnete Lesegerät die Daten über die Dicke und ggf. auch über die Länge und Breite der Glastafeln erfaßt.

9. Anlage nach Anspruch 7, dadurch gekennzeichnet, daß ein Lesegerät vorgesehen ist, das die auf dem Datenträger enthaltenen Daten über die Länge und Breite des Isolierglases sowie die Breite des zu verwendenden Abstandhalterrahmens erfaßt und das einer Vorrichtung zum Herstellen von Abstandhalterrahmen, beispielsweise einer Rahmenbiegevorrichtung und ggf. auch eine Vorrichtung zum Beschichten der Abstandhalterrahmen mit Klebmasse zugeordnet ist, so daß diese Vorrichtung aufgrund der ausgelesenen Daten steuerbar sind.

l0. Anlage nach Anspruch 7, dadurch gekennzeichnet, daß das der Station zum Ansetzen von Abstandhalterrahmen an eine Glastafel zugeordnete Lesegerät die am Datenträger enthaltenen Daten über die Abmessungen des für das herzustellende Isolierglas bestimmten Abstandhalterrahmens (wie Länge und Breite) erfaßt und die Bewegungen einer Halterung für den anzusetzenden Abstandhalterrahmen zur Anpassung derselben an die Abmessungen des Abstandhalterrahmens steuert.

II. Anlage nach Anspruch 7, dadurch gekennzeichnet, daß das der Zusammenbaustation zugeordnete Lesegerät Daten über die Höhe und Dicke des herzustellenden Isolierglases sowie Angaben über Zwei- oder Mehrfachisolierglas erfaßt und das Ausmaß der Bewegungen der Zusammenbaustation einschließlich des Zustellens des mit Rollen bestückten Balkens, an welchem die zweite Glastafel oben anliegend in die Zusammenbaustation gefördert wird, steuert.

I2. Anlage nach Anspruch 7, dadurch gekennzeichnet, daß das der Preßstation zugeordnete Lesegerät die Daten über die Größe des Isolierglases erfaßt und in Abhängigkeit davon den Preßdruck steuert.

I3. Anlage nach Anspruch 7, dadurch gekennzeichnet, daß das der Versiegelungsstation zugeordnete Lesegerät Daten über die Längen der zu verfüllenden Randfugen und deren Breite sowie Tiefe erfaßt und die Bewegung der Versiegelungsdüse(n) steuert.

I4. Anlage nach Anspruch I3, dadurch gekennzeichnet, daß das der Versiegelungsstation zugeordnete Lesegerät zusätzlich die auf den Datenträger enthaltenen Daten über die Dicke des Isolierglases erfaßt und das hakenförmige, das Isolierglas von unten untergreifende Auflager umfassende Fördermittel entsprechend der Stärke des Isolierglases einstellt.

I5. Anlage nach Anspruch I3, dadurch gekennzeichnet, daß das der Versiegelungsstation zugeordnete Lesegerät zusätzlich aufgrund der Daten über Länge, Breite und Tiefe der zu verfüllenden Randfugen, die Geschwindigkeit der Relativbewegung zwischen Versiegelungsdüse einerseits und Isolierglas anderseits und die Menge der in der Zeiteinheit aus der Düse ausgebrachten Versiegelungsmasse steuert.

I6. Anlage nach Anspruch 7, dadurch gekennzeichnet, daß einer Vorrichtung zum Ablängen von Kantenschutzprofilen für Isolierglas ein Lesegerät zugeordnet ist, der die Länge und Breite des Isolierglases erfaßt und die Ablängvorrichtung für die Kantenschutzprofile entsprechend steuert.

I7. Anlage nach Anspruch 7, dadurch gekennzeichnet, daß einer Station zum Füllen von insbesondere gebogenen Abstandhalterrahmens mit Trockenmittel (Molekularsieb) ein Lesegerät zugeordnet ist, das die Daten über die Abmessungen des Abstandhalterrahmens für das herzustellende Isolierglas erfaßt und in Abhängigkeit davon die Menge des einzubringenden Trockenmittels steuert.

FIG. 1

0252066

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 377 890 (MILLER)<br><br>* Spalte 1, Zeile 52 - Spalte 3, Zeile 54; Spalte 4, Zeile 38 - Spalte 6, Zeile 21; Figuren 1-4 *<br><br>--- | 1-4,7-17 | E 06 B 3/66<br>G 05 B 19/12 |
| Y | DE-A-3 013 398 (BROWN, BOVERIE & CO.)<br>* Seite 2, Zeile 6 - Seite 6, Zeile 27; Figur *<br><br>--- | 1,2,5,7-17 | |
| Y | DE-A-2 456 554 (RSV PRÄZISIONSMESSGERÄTE)<br>* Seite 1, Zeile 1 - Seite 5, Zeile 10; Figur *<br><br>--- | 1-5,7-13,15 | |
| Y | FR-A-2 449 222 (KAUFERLE)<br><br>* Seite 13, Zeile 38 - Seite 17, Zeile 14; Seite 20, Zeile 26 - Seite 22, Zeile 15; Figuren 1-12 *<br><br>--- | 1-5,7-12,17 | RECHERCHIERTE SACHGEBIETE (Int. Cl.4)<br><br>E 06 B<br>G 05 B |
| Y | CH-A- 522 814 (HEGLAS)<br><br><br>* Spalte 5, Zeile 48 - Spalte 9, Zeile 11; Figuren 1-3 *<br><br>--- -/- | 1-5,7,8,10,13,15,16 | |

Der vorliegende Recherchenbericht wurde für alle Patentansprüche erstellt.

| Recherchenort | Abschlußdatum der Recherche | Prüfer |
|---|---|---|
| DEN HAAG | 02-10-1987 | DEPOORTER F. |

Europäisches
Patentamt

**EUROPÄISCHER RECHERCHENBERICHT**

Nummer der Anmeldung

EP 87 89 0142

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 408 688 (LISEC)<br><br>* Seite 8, Zeile 15 - Seite 9, Zeile 16; Figur 7 *<br><br>----- | 1-5,7,<br>11,13-<br>15 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 02-10-1987 | DEPOORTER F. |